# EUROPEAN PATENT APPLICATION

(11) **EP 1 661 494 A1**
(43) Date of publication of application: **31.05.2006**
(21) Application number: 04028339.2
(22) Date of filing: 30.11.2004
(51) Int. Cl.: A47C 7/24, A47C 7/46, B60N 2/70

(54) **Support structure for a seat**

(71) Applicant: L&P Swiss Holding Company, 9303 Wittenbach (CH)
(72) Inventor: Catry, Pierrot, 8587 Spiere (BE); Pattyn, Jo, 8940 Geluwe (BE)
(74) Representative: Banzer, Hans-Jörg

(57) **Abstract**

A support structure for a seat is provided comprising two lateral side wires (1, 2) and a plurality of transverse wires (4-12) extending between the two lateral side wires (1, 2) is provided. The plurality of transverse wires (4-12) comprises a first transverse wire having a first convolution (4A-12A, 4B-12B) and a second transverse wire having a second convolution (4A-12A, 4B-12B). According to the invention, a shape of said first convolution (4A-12A, 4B-12B) is different from a shape of said second convolution (4A-12A, 4B-12B) for example by varying a dimension like the height of said shapes. With such an arrangement, the transversal resiliency of the support structure may be varied and thus adapted to load bearing requirements.

## Description

The present invention relates to a support structure for a seat, the support structure having a wire framework or grid comprising two lateral side wires and a plurality of transverse wires extending between the two lateral side wires and providing load bearing support for a upholstery of the seat.

Support structures of the afore mentioned kind are very well known and may have various configurations to accommodate various designs of seats in which the support structure is to be mounted, for example seats of a vehicle like a car.

Such a support structure is for example known from GB 2 342 287 A. The support structure disclosed in this prior art document comprises a wire framework having two lateral side wires suspendable in a seat frame and between which a plurality of transverse wires which provide load bearing support for a upholstery of a seat extend. The transverse wires are attached to the lateral side wires e. g. by being wound around the latter. Some of the transverse wires extend beyond the respective lateral side wire and terminate in free ends which can be formed as hook-like fingers for attachment to a seat frame. Moreover, the transverse wires exhibit trapezoidal convolutions in the plane of the support structure to provide a transversal resiliency. In the structure shown in GB 2 342 287A, the diameter of some of the transverse wires differs from the diameter of other transverse wires in the transport structure to provide sections with different stiffness. By choosing the location of the wires having different thicknesses, the support structure may be customized to the respective application. For example, wires having a greater diameter may be provided in a lumbar region to provide greater support for an occupant of the seat for which the support structure is designed.

However, it would be desirable to be able to further customize such support structures to adapt them to different applications, possibly without using wires having different thicknesses since this makes manufacturing the structure more complicated.

It is therefore an object of the present invention to provide a support structure wherein different sections of the support structure may be easily adapted to different load bearing conditions.

According to the present invention, this object is achieved by a support structure according to independent claim 1. The dependent claims define preferred or advantageous embodiments of the present invention and a seat suspension arrangement incorporating the support structure according to the present invention.

The support structure of the present invention has two lateral side wires and a plurality of transverse wires extending between the two lateral side wires. Said plurality of transverse wires comprises a first transverse wire having a first convolution and a second transverse wire having a second convolution. According to the present invention, a shape of said first convolution is different from a shape of said second convolution.

Therefore, by providing a first convolution and a second convolution having different shapes, a transversal resiliency of said first transverse wire may be designed to be different from a transversal resiliency of said second transverse wire. Therefore, the transversal resiliency may be varied over the support structure.

In particular, according to the present invention the support structure may be adapted to different load bearing conditions in different sections of the support structure without using wires of different thicknesses or materials by choosing appropriate shapes of the first convolution and the second convolution, which makes the support structure easy to manufacture. However, if an additional degree of freedom for design is needed, wires of different thicknesses or materials may also be used.

The first convolution and the second convolution may be formed such that the first convolution and the second convolution are situated in a plane defined by said plurality of transverse wires and the two lateral side wires. In particular, the first convolution and/or the second convolution may be trapezoidal, rectangular, triangular or sinusoidal convolutions. In this case, the shape may be varied by varying a height of the convolution in a direction parallel to the direction of the two lateral side wires.

It is possible that further transverse wires of said plurality also have convolutions which are different from said first convolution and/or said second convolution. In particular, all transverse wires of said plurality may have one or more respective convolutions, whereby the shape of said convolutions is varied over the support structure.

For example, a height of said convolutions may be varied linearly or nonlinearly in the direction of the two lateral side wires.

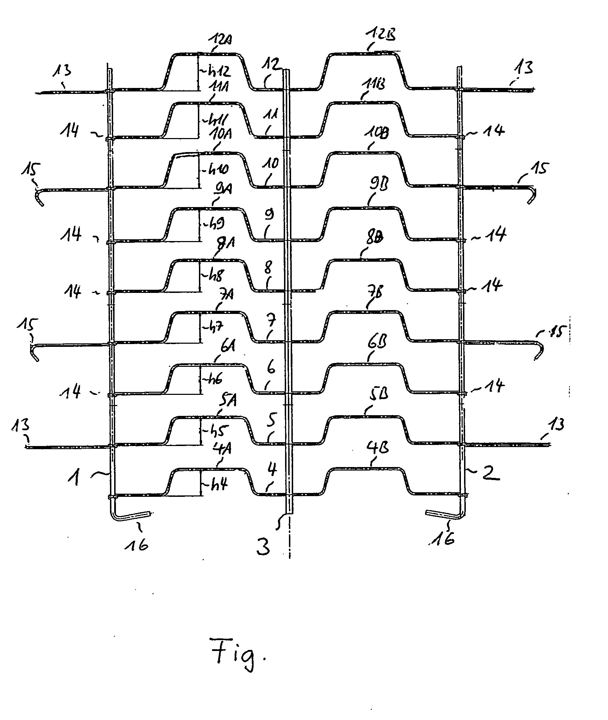

In the following, a preferred embodiment of the present invention will be described with reference to the accompanying drawing wherein the only Figure is a plan view of a support structure in accordance with a preferred embodiment of the present invention.

The only Figure shows a support structure for incorporation in a seat frame. Such support structures are also known as suspension mats or pads. The support structure shown in the Figure is in particular adapted to provide load bearing support for upholstery of a respective seat, for example a seat in a vehicle like a car.

The support structure comprises a pair of lateral side wires or side rails 1, 2 which are interconnected by a plurality of transverse wires 4-12 extending between the lateral side wires 1, 2 and being anchored or attached to the lateral side wires 1, 2 by being wound around the latter, wherein the lateral side wires 1, 2 are basically parallel to each other and the transverse wires 4-12 are generally perpendicular to the lateral side wires 1, 2. Some transverse wires, in particular transverse wires 5, 7, 10 and 12, extend beyond the lateral side wires 1, 2 to form extended portions 13 and 15. Extended portions 13 are straight extended portions, whereas extended portions 15 have hook-like fingers formed at an end thereof. The extended portions 13, 15 serve to mount the support structure for example in a seat frame of a seat to be suspended therein. In this respect, it should be noted that the extended portions 13, 15 may be situated in the plane defined by the side wires 1, 2 and the transverse wires 4-12 or may be angled with respect to this plane, depending on the seat frame where the support structure is to be mounted. Moreover, more or less extended portions 13, 15 than shown in the Figure may be present, or they may be placed differently from the embodiment shown in the Figure.

Furthermore, angled portions 16 are present at end portions of the lateral side wires 1, 2 which also may serve to mount the support structure in a seat frame. As an alternative, the angled portions 16 may be extended such that they connect with one another so as to form an U-shaped frame formed by the lateral side wires 1, 2 and the extended portions 16. Furthermore, in the embodiment shown in the Figure the transverse wires 4-12 extend through a center cord 3 or tube of paper or synthetic plastic material which serves to maintain a predefined vertical spacing between the transverse wires 4-12.

The transverse wires 4-12 comprise convolutions 4A-12A and 4B-12B, wherein the convolutions 4A-12A are situated between the lateral side wire 1 and the center cord 3 and the convolutions 4B-12B are situated between center cord 3 and lateral side wire 2. The convolutions 4A-12A, 4B-12B generally have a trapezoidal shape as shown in the Figure. The dimensions of the convolutions of one transverse wire, e. g. convolutions 4A and 4B of transverse wire 4, are basically the same.

These convolutions serve to provide a certain transversal resiliency to the support structure, which serves to increase the comfort for a person occupying a seat incorporating the support structure.

The convolutions 4A-12A have heights h4-h12 respectively. As can be seen in the Figure, the heights h4-h12 increase from convolution 4A to convolution 12A, i. e. the height h4 is the smallest height and the height h12 is the largest height. The increase may be linear. For example, for a support structure wherein a length of the lateral side wires 1, 2 is approximately 35 centimeters and a transverse distance between the lateral side wires 1, 2 is about 27 centimeters, h4 may be 22 millimeters and the height of the convolutions may increase from transverse wire to transverse wire by one millimeter, so that h5 is approximately 23 millimeters, h6 is approximately 24 millimeters and so on until h12 is approximately 30 millimeters.

Because of the heights h4-h12 of the convolutions 4A, 4B to 12A, 12B of the transverse wires 4-12 vary, the transverse resiliency of the transverse wires 4-12 is also varied. In particular, in the embodiment shown, the transversal resiliency of transverse wire 4 is the smallest and the transversal resiliency of transverse wire 12 is the largest of the transverse wires 4-12 i. e. transverse wire 12 may be expanded more easily than transverse wire 4. If the support structure shown in the Figure is mounted in a backrest of a seat in a position as shown in the Figure, i. e. with transverse wire 12 being closer to a top side of the backrest than transverse wire 4 while the lateral side wires 1, 2 run near side faces of the backrest in a basically vertical direction (depending on an inclination of the backrest), this means that in a lumbar region of the backrest the transversal resiliency is less than in a shoulder region of the backrest, thus providing stronger support in the lumbar region which increases the comfort for an occupant of the seat.

Of course, the variation of the heights h4-h12 does not have to be linear as in the embodiment shown in the Figure but may be varied according to a desired application. For example, it may be possible that some of the convolutions 4A-12A, 4B-12B have a first height, whereas the remaining convolutions have a second height different from the first height. It is also possible to increase the height for example from h4-h8 and then decrease the height again gradually from h8-h12, thereby providing an increased transverse resiliency in a middle portion of the support structure, whereas at a bottom end and at a top end of the support structure the transversal resiliency is reduced.

Furthermore, instead of varying only the height of the convolutions 4A-12A, 4B-12B of the transverse wires 4-12, the shape of the convolutions may be varied in other ways, for example by varying another dimension like the width of the convolutions or by using different basic shapes of the convolutions, i. e. triangular shapes, sinusoidal shapes, rectangular shapes or the like. Therefore, different transversal resiliencies may also be provided by using those different basic shapes. On the other hand, all transverse wires 4-12 may have the same basic shape which, however, is different from the trapezoidal shape shown, for example a triangular shape. Then, according to the present invention, the height or the width of the triangular convolutions could be varied. Generally, the trapezoidal shape of the convolutions is preferred since it is easy to manufacture.

It should be noted that in the embodiment shown in the Figure the convolutions 4A-12A, 4B-12B are situated in the plane defined by the transverse wires and the lateral side wires 1, 2. However, the convolutions may also extend above or below that plane provided this causes no discomfort to a person using the seat for which the support structure is intended.

Finally, while in the embodiment shown the transverse wires 4-12 comprise two convolutions each, they may also comprise only one convolution or more than two convolutions, or some transverse wires may have no convolution at all. In this respect, it should be noted that the number of convolutions in each transverse wire does not have to be constant.

## Claims

1. A support structure for a seat comprising
two lateral side wires (1, 2) and
a plurality of transverse wires (4-12) extending between the two lateral side wires (1, 2), said plurality of transverse wires comprising a first transverse wire (4-12) having a first convolution (4A-12A, 4B-12B) and a second transverse wire (4-12) having a second convolution (4A-12A, 4B-12B),
**characterized in that**
a shape of said first convolution (4A-12A, 4B-12B) is different from a shape of said second convolution (4A-12A, 4B-12B).

2. The support structure according to claim 1,
**characterized in that**
the shape of said first convolution (4A-12A, 4B-12B) and the shape of said second convolution (4A-12A, 4B-12B) are designed such that a transversal resiliency of said first transverse wire is greater than a transversal resiliency of said second transverse wire.

3. The support structure according to claim 1 or claim 2,
**characterized in that**
said first convolution and/or said second convolution are formed in a plane defined by said two lateral side wires (1, 2) and said plurality of transverse wires (4-12).

4. The support structure according to any one of the preceding claims,
**characterized in that**
a dimension of said first convolution (4A-12A, 4B-12B) is different from a dimension of said second convolution (4A-12A, 4B-12B).

5. The support structure according to claim 4,
**characterized in that**
said dimension (h4-h12) of said first convolution (4A-12A, 4B-12B) and said dimension (h4-h12) of said second convolution (4A-12A, 4B-12B) is a dimension parallel to a direction of said two lateral side wires (1, 2).

6. The support structure according to any one of the preceding claims,
**characterized in that**
the shape of said first convolution (4A-12A, 4B-12B) is one of the group consisting of a trapezoidal shape, a rectangular shape, a triangular shape or a sinusoidal shape.

7. The support structure according to any one of the preceding claim,
**characterized in that**
the shape of said second convolution (4A-12A, 4B-12B) is one of the group consisting of a trapezoidal shape, a rectangular shape, a triangular shape or a sinusoidal shape.

8. The support structure according to any one of the preceding claims,
**characterized in that**
each transverse wire of said plurality of transverse wires (4-12) has a respective convolution (4A-12A, 4B-12B),
wherein shapes of said respective convolutions are designed such that the transversal resiliency of the support structure varies in a direction parallel to said two lateral side wires (1, 2).

9. The support structure according to claim 8,
**characterized in that**
the transversal resiliency of said support structure varies monotonously in said direction parallel to the direction of the two lateral side wires (1, 2).

10. The support structure according to claim 8 or claim 9,
**characterized in that**
said respective convolutions (4A-12A, 4B-12B) have trapezoidal shapes, and **in that**
a height (h4-h12) of said trapezoidal shapes is varied between the transverse wires to vary the transversal resiliency of said transverse wires (4-12).

11. The support structure according to claim 10,
**characterized in that**
said height (h4-h12) of said trapezoidal shapes is varied monotonously in a direction parallel to the direction of the two lateral side wires (1, 2).

12. The support structure according to claim 11,
**characterized in that**
said height (h4-h12) of said trapezoidal shapes is varied linearly in said direction parallel to the direction of the two lateral side wires (1, 2).

13. A seat suspension arrangement, comprising
a seat frame and
a support structure according to any one of the preceding claims which is suspended in said seat frame.
